Europäisches Patentamt

European Patent Office

Office européen des brevets

(11) Veröffentlichungsnummer: **0 338 583**
**A2**

(12) # EUROPÄISCHE PATENTANMELDUNG

(21) Anmeldenummer: 89107250.6

(22) Anmeldetag: 21.04.89

(51) Int. Cl.⁴: **B23K 9/12**

(30) Priorität: 22.04.88 BG 83852/88

(43) Veröffentlichungstag der Anmeldung:
25.10.89 Patentblatt 89/43

(84) Benannte Vertragsstaaten:
**AT BE CH DE ES FR GB GR IT LI LU NL SE**

(71) Anmelder: **INSTITUT PO TECHNITSCHESKA KIBERNETIKA I ROBOTIKA**
**Akademik Bontschev-Strasse, Block 12**
**Sofia(BG)**

(72) Erfinder: **Samokovliski, David Albert, Dipl.-Ing.**
**G. Kirkov Strasse 13**
**BG-1000 Sofia(BG)**
Erfinder: **Alexiev, Krassimir Iliev, Dipl.-Ing.**
**Komplex Lyulin Block 332 A**
**BG-1000 Sofia(BG)**
Erfinder: **Petrov, Peter Dimitrov**
**Komplex Svoboda Block 12 B**
**BG-1229 Sofia(BG)**
Erfinder: **Rashev, Zahari Petrov, Dipl.-Ing.**
**Patriarh Evtimii Boul. 15**
**BG- Sofia(BG)**

(74) Vertreter: **Finck, Dieter et al**
**Patentanwälte v. Füner, Ebbinghaus, Finck**
**Mariahilfplatz 2 & 3**
**D-8000 München 90(DE)**

(54) **Verfahren und Vorrichtung zur pulsierenden Zuführung von endlosem Elektrodendraht.**

(57) Bei dem Verfahren zur pulsierenden Zuführung von endlosem Elektrodendraht werden nach jedem auf den Elektrodendraht entgegen seiner Zuführungsrichtung wirkenden negativen Impuls ein auf den Elektrodendraht in seiner Zuführungsrichtung wirkender positiver Impuls übertragen. Dies wird mit einer Vorrichtung erreicht, die einen Rollen aufweisenden planetaren Drahtzuführungskopf (1) zur kontinuierlichen Zuführung von endlosem Elektrodendraht (2) mit einer konstanten Geschwindigkeit und einen Exzentermechanismus (3) aufweist, mit dem sich die Zuführungsgeschwindigkeit des Elektrodendrahts (2) ändern läßt. Der Exzentermechanismus (3) besteht aus einem unbeweglich mit einem Drahtabführstutzen (4) des Drahtzuführungskopfes (1) verbundenen Hohlkörper (5), der auf seiner dem Drahtabführstutzen (4) gegenüberliegenden Seite mit einer Öffnung versehen ist, in der eine den Elektrodendraht (2) führende Buchse (6) angeordnet ist, deren Exzentrizität (e) bezüglich der Achse des Drahtzuführungskopfes (1) und seines Drahtabführstutzens (4) einstellbar ist. Der Buchse (6) ist in Laufrichtung des Elektrodendrahtes (2) eine Aufnahmedüse (7) für einen Schweißschlauch (8) nachgeordnet, die so verstellbar ist, daß sie zur Zuführungsrichtung des aus der Buchse (6) zugeführten Elektrodendrahtes (2) jeweils fluchtend ausgerichtet werden kann.

Fig. 1

## Verfahren und Vorrichtung zur pulsierenden Zuführung von endlosem Elektrodendraht

Die Erfindung betrifft ein Verfahren zur pulsierenden Zuführung von endlosem Elektrodendraht, bei welchem auf den Elektrodendraht in seiner Zuführungsrichtung wirkende positive Impulse übertragen werden, sowie eine Vorrichtung zur Durchführung dieses Verfahrens mit einem Rollen aufweisenden, planetaren Drahtzuführungskopf zur kontinuierlichen Zuführung von endlosem Elektrodendraht mit einer konstanten Geschwindigkeit und mit einem Exzentermechanismus zur Änderung der Zuführungsgeschwindigkeit des Elektrodendrahts, der zwischen dem Drahtzuführungskopf, mit dem er verbunden ist, und einer Aufnahmedüse für einen Schweißschlauch angeordnet ist.

Ein solches Verfahren und eine solche Vorrichtung sind aus der US-A 33 39 057 bekannt und werden beim Lichtbogenschweißen mit einer abschmelzenden oder nicht abschmelzenden Elektrode, sowie beim halbautomatischen, automatischen oder robotisierten Schweißen sowie beim Auftragsschweißen eingesetzt.

Bei dem bekannten Verfahren wird die Zuführung des Elektrodendrahts während eines ersten Zeitabschnitts unterbrochen, während in einem daran anschließenden zweiten Zeitabschnitt der Elektrodendraht mit einer Geschwindigkeit zugeführt wird, die größer ist als die Schmelzgeschwindigkeit. Dieser Zyklus wird mit einer festgelegten konstanten Frequenz wiederholt. Beim Schmelzen an der Elektrodenspitze befindet sich ein Tropfen aus Elektrodenmetall, der während des zweiten Zeitabschnitts in Berührung mit dem flüssigen Metall gelangt, abreißt und sich zum Schweißgut hin bewegt. Der Schweißlichtbogen macht während eines jeden Zyklus durch Kontakt einen Kurzschluß, der durch Trennung wieder unterbrochen wird. Bei Benutzung von spezifischen Wärmequellen mit einem breiten Wärmefleck kann die Tropfenbildung nicht dosiert werden, da auf den Elektrodendraht nur in Richtung der Elektrodendrahtzuführung wirkende Impulse, sogenannte positive Impulse übermittelt werden. Ferner muß die Zuführung des Elektrodendrahts unterbrochen werden. Mit der bekannten Vorrichtung ist es außerdem nicht möglich, die Amplitude und die Pulsationsfrequenz stufenlos zu ändern.

Die der Erfindung zugrunde liegende Aufgabe besteht nun darin, das Verfahren und die Vorrichtung der eingangs beschriebenen gattungsgemäßen Art so zu gestalten, daß zur Änderung der Schweißparameter die Amplitude und Pulsationsfrequenz der Elektrodendrahtzuführung stufenlos einstellbar bzw. veränderbar sind.

Diese Aufgabe wird ausgehend von dem Verfahren der eingangs genannten Art dadurch gelöst, daß auf den Elektrodendraht auch entgegen seiner Zuführungsrichtung wirkende negative Impulse übertragen werden, wobei nach jedem negativen Impuls ein positiver Impuls übertragen wird.

Zur Durchführung dieses Verfahrens ist die Vorrichtung der gattungsgemäßen Art so ausgestaltet, daß der Exzentermechanismus einen unbeweglich mit einem Drahtabführstutzen des Drahtzuführungskopfes verbundenen Hohlkörper aufweist, der auf seiner, der Aufnahmedüse zugewandten Seite mit einer Öffnung versehen ist, in der eine den Elektrodendraht führende Buchse angeordnet ist, deren Exzentrizität bezüglich der Achse des Drahtzuführungskopfes und seines Drahtabführstutzens einstellbar ist, und daß die Aufnahmedüse für den Schweißschlauch so verstellbar ist, daß sie zur Zuführungsrichtung des aus der Buchse zugeführten Elektrodendrahtes fluchtend ausgerichtet ist.

Dabei ist vorteilhafterweise die der Aufnahmedüse zugewandte Öffnung in dem Hohlkörper konzentrisch zur Achse des Drahtzuführungskopfes ausgebildet, während der Buchse ein Schraubmechanismus für ihre zur Achse des Drahtzuführungskopfes und seines Drahtabführstutzens parallele stufenlose Verstellung zugeordnet ist.

Vorzugsweise ist die der Aufnahmedüse zugewandte Öffnung in dem Hohlkörper exzentrisch zur Achse des Drahzuführungskopfes ausgebildet, ist die Buchse in der Öffnung so angeordnet, daß ihre Achse zu der Achse des Drahtzuführungskopfes geneigt ist, ist die Buchse als zylindrischer Becher ausgebildet, in dessen der Aufnahmedüse zugewandten Boden eine außermittige Auslaßöffnung für den Elektrodendraht ausgebildet ist, und ist ferner die Buchse zur Einstellung ihrer Exzentrizität in der Öffnung in dem Hohlkörper verdrehbar angeordnet.

Dadurch, daß dem vom planetaren Drahtzuführungskopf kontinuierlich zugeführten endlosen Elektrodendraht auch negative Impulse zwischen den positiven Impulsen erteilt werden können, ist es möglich, bei spezifischen Wärme quellen mit breitem Wärmefleck die Tropfenbildung zu dosieren. Ferner läßt sich durch die Einstellung der Exzentrizität eine stufenlose Änderung der Amplitude und der Pulsationsfrequenz erreichen.

Anhand von Zeichnungen werden Ausführungsbeispiele der Erfindung näher erläutert. Es zeigen:

Fig. 1 im Längsschnitt eine erste Ausführungsform der Vorrichtung und

Fig. 2 im Längsschnitt eine zweite Ausführungsform der Vorrichtung.

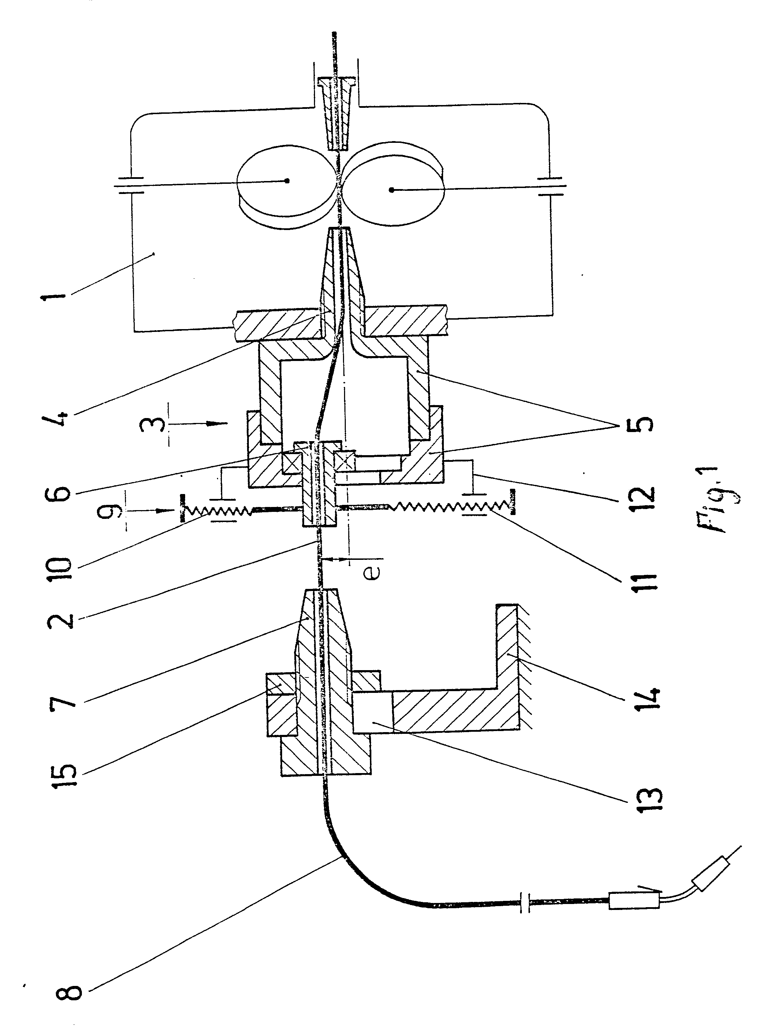

Die in Fig. 1 gezeigte erste Ausführungsform der Vorrichtung zur pulsierenden Zuführung von endlosem Elektrodendraht 2 hat einen planetaren Drahtzuführkopf 1 mit Rollen und einen Drahtabführstutzen 4, wobei der Elektrodendraht 2 im Drahtzuführungskopf 1 auf der Achse des Drahtabführungsstutzens 4 transportiert wird.

Die Zuführungsgeschwindigkeit des Eletrodendrahtes 2 wird mit Hilfe eines Exzentermechanismus 3 verändert. Der Exzentermechanismus 3 weist einen Hohlkörper 5 auf, der am Drahtzuführungskopf 1 festgelegt ist und in den der Drahtabführungsstutzen 4 des Drahtzuführungskopfes 1 mündet. Der Hohlkörper 5 hat auf der dem Drahtabführstutzen 4 gegenüberliegenden Seite eine zu dessen Achse konzentrische Öffnung, in der eine Buchse 6 so angeordnet ist, daß ihre Achse parallel zur Achse des Drahtabführstutzens 4 verläuft. Die Buchse 6 ist mit einem Schraubmechanismus 9 zum stufenlosen Einstellen ihrer Exzentrizität e bezogen auf die Achse des Drahtzuführungskopfes 1 und seines Drahtabführstutzens 4 versehen. Der Schraubmechanismus 9 umfaßt zwei Regulierschrauben 10 und 11, die an der Buch se 6 angreifen und in Gewindehülsen 12 geführt sind, die am Hohlkörper 5 befestigt sind. Der Elektrodendraht 2 wird durch die zentrale innere Bohrung der Buchse 6 geführt. Der Buchse 6 ist auslaßseitig gegenüberliegend eine Aufnahmedüse 7 für einen Schweißschlauch 8 zugeordnet. Die Aufnahmedüse 7 ist in einem Langloch 13 in einem Ständer 14 geführt und mit Hilfe einer Mutter 15 jeweils in der Lage festlegbar, in der die Aufnahmedüse 7 fluchtend zur Achse der Buchse 6 ausgerichtet ist, die Aufnahmedüse 7 also die gleiche Exzentrizität e bezogen auf die Achse des Drahtzuführungskopfes 1 wie die Buchse 6 hat.

Wenn die Rollen in dem planetaren Drahtzuführkopf 1 in Drehung versetzt werden, wird der endlose Elektrodendraht 2 von einem nicht gezeigten Wickel durch den Drahtabführstutzen 4, den Hohlkörper 5 und die exzentrisch angeordnete Buchse 6 zu der fluchtend gegenüberliegend angeordneten Aufnahmedüse 7 für den Schweißschlauch 8 geführt. Die Exzentrizität e der Buchse 6 wird mit Hilfe der Regulierschrauben 10 und 11 eingestellt, wobei die Exzentrizität e der Aufnahmedüse 7 des Schweißschlauches 8 mit Hilfe der Mutter 15 entsprechend angepaßt wird, die für die Einstellung gelöst und anschließend wieder festgezogen wird. Abhängig von der Verstellung der Exzentrizität e ändert sich auch die Amplitude der Pulsationen des Elektrodendrahts 2, d.h. die intermittierende Drahtzuführung, wobei sich bei der maximal möglichen Exzentrizität e die Maximalamplitude der Pulsationen ergibt, während bei einer Exzentrizität e, die null ist, keine Pulsationen auftreten, da der Eltrodendraht 2 in diesem Fall auf einer Achse vom Drahtzuführungskopf 1 durch den Drahtabführstutzen 4, den Hohlkörper 5, die Buchse 6 und die Aufnahmedüse 7 geführt wird.

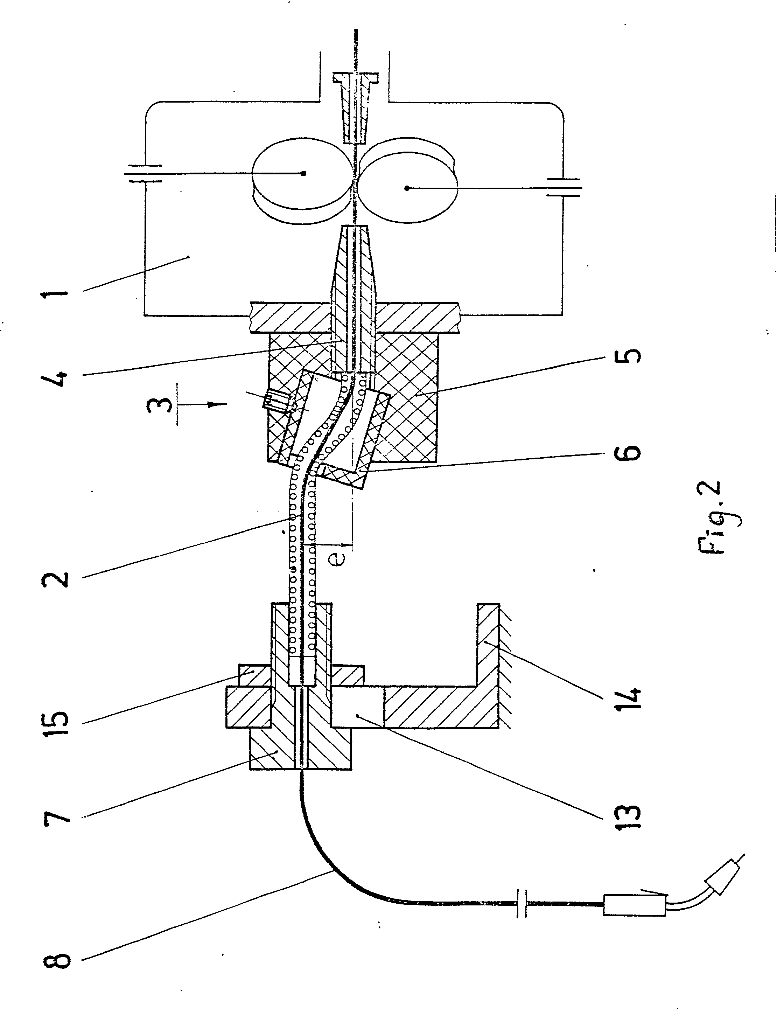

Bei der in Fig. 2 gezeigten Vorrichtung sind gegenüber der Ausführung von Fig. 1 der Hohlkörper 5 und die Buchse 6 anders gestaltet. Der Hohlkörper 5 hat auf der der Aufnahmedüse 7 zugewandten Seite eine außermittig bzw. exzentrisch angeordnete Öffnung. Die Buchse 6 ist als Becher mit einer zylindrischen Außenfläche und einem Boden ausgebildet, der exzentrisch eine Austrittsöffnung aufweist. Die Buchse 6 ist in dem Hohlkörper 5 so angeordnet, daß ihre Achse zur Achse des Drahtzuführungskopfes 1 mit seinem Drahtabführstutzen 4 geneigt ist. Die Öffnung des die Buchse 6 bildenden Bechers ist dabei gegenüber dem Drahtabführstutzen 4 angeordnet, während ihr Boden mit der exzentrischen Öffnung der Aufnahmedüse 7 zugewandt ist. Die Buchse 6 ist in dem Hohlkörper 5 verdrehbar angeordnet, wobei die eingestellte Stellung, die die Exzentrizität e festlegt, mit Hilfe einer Stiftschraube fixierbar ist.

Bei der in Fig. 2 gezeigten Ausführungsform der Vorrichtung wird die gewünschte Amplitude der Pulsationen durch Verdrehen der Buchse 6 bezüglich des Hohlkörpers 5 eingestellt, wobei die Verdrehung so weit vorgenommen wird, bis die gewünschte Exzentrizität e erreicht ist, die durch Festziehen der Stiftschraube fixiert wird. Anschließend wird die Aufnahmedüse 7 für den Schweißschlauch 8 wie beschrieben in die fluchtende Ausrichtung zu dem Drahtaustritt aus der exzentrischen Öffnung im Boden der Buchse 6 gebracht.

**Ansprüche**

1. Verfahren zur pulsierenden Zuführung von endlosem Elektrodendraht (2), bei welchem auf den Elektrodendraht (2) in seiner Zuführungsrichtung wirkende positive Impulse übertragen werden, dadurch **gekennzeichnet,** daß auf den Elektrodendraht (2) auch entgegen seiner Zuführungsrichtung wirkende negative Impulse übertragen werden, wobei nach jedem negativen Impuls ein positiver Impuls übertragen wird.

2. Vorrichtung zur Durchführung des Verfahrens nach Anspruch 1 mit einem Rollen aufweisenden planetaren Drahtzuführungskopf (1) zur kontinuierlichen Zuführung von endlosem Elektrodendraht (2) mit einer konstanten Geschwindigkeit und mit einem Exzentermechanismus (3) zur Änderung der Zuführungsgeschwindigkeit des Elektrodendrahts (2), der zwischen dem Drahtzuführungskopf (1), mit dem er verbunden ist, und einer Aufnahmedüse (7) für einen Schweißschlauch (8) angeordnet ist, dadurch **gekennzeichnet,** daß der Exzentermechanismus (3) einen ·unbeweglich mit einem Drahtabführstutzen (4) des Drahtzuführungskopfes (1) verbundenen Hohlkörper (5) aufweist, der auf seiner der Aufnahmedüse (7) zugewandten Seite mit einer Öffnung versehen ist, in der eine den Elektrodendraht (2) führende Buchse (6) angeordnet ist, deren Exzentrizität (e) bezüglich der Achse des Drahtzuführungskopfes (1) und seines Drahtabführstutzens (4) einstellbar ist, und daß die Aufnahmedüse (7) für den Schweißschlauch (8) so verstellbar ist, daß sie zur Zuführungsrichtung des aus der Buchse (6) zugeführten Elektrodendrahtes (2) fluchtend ausgerichtet ist.

3. Vorrichtung nach Anspruch 2, dadurch **gekennzeichnet,** daß die der Aufnahmedüse (7) zugewandte Öffnung in dem Hohlkörper (5) konzentrisch zu der Achse des Drahtzuführungskopfes (1) ausgebildet ist und daß der Buchse (6) ein Schraubmechanismus (9) für ihre zur Achse des Drahtzuführungskopfes (1) und seines Drahtabführstutzens (4) parallele stufenlose Verstellung zugeordnet ist.

4. Vorrichtung nach Anspruch 2, dadurch **gekennzeichnet,** daß die der Aufnahmedüse (7) zugewandte Öffnung in dem Hohlkörper (5) exzentrisch zur Achse des Drahtzuführungskopfes (1) ausgebildet ist, daß die Buchse (6) in der Öffnung so angeordnet ist, daß ihre Achse zu der Achse des Drahtzuführungskopfes (1) geneigt ist, daß die Buchse (6) als zylindrischer Becher ausgebildet ist, in dessen der Aufnahmedüse (7) zugewandten Boden eine außermittige Auslaßöffnung für den Elektrodendraht (2) ausgebildet ist und daß die Buchse (6) zur Einstellung ihrer Exzentrizität (e) in der Öffnung in dem Hohlkörper (5) verdrehbar angeordnet ist.

Fig 1

Fig. 2